# EUROPÄISCHE PATENTSCHRIFT

(11) **EP 3 441 842 B1**
(45) Veröffentlichungstag und Bekanntmachung des Hinweises auf die Patenterteilung: **19.05.2021**
(21) Anmeldenummer: 18187217.7
(22) Anmeldetag: 03.08.2018
(51) Int. Cl.: G05D 1/02

(54) **VERFAHREN ZUM BETRIEB EINES SICH SELBSTTÄTIG FORTBEWEGENDEN BODENBEARBEITUNGSGERÄTES**
METHOD FOR OPERATING AN AUTOMATICALLY MOVING SOIL-WORKING IMPLEMENT
PROCÉDÉ DE FONCTIONNEMENT D'UN APPAREIL DE TRAITEMENT DU SOL MOBILE AUTOMATIQUE

(30) Priorität: 11.08.2017 DE 102017118381
(43) Veröffentlichungstag der Anmeldung: 13.02.2019
(73) Patentinhaber: Vorwerk & Co. Interholding GmbH, 42275 Wuppertal (DE)
(72) Erfinder: Brede, Maike, 58454 Witten (DE); Hahn, Pia, 58332 Schwelm (DE); Hillen, Lorenz, 42287 Wuppertal (DE); Isenberg, Gerhard, 50668 Köln (DE); Windorfer, Harald, 40822 Mettmann (DE)
(74) Vertreter: Müller, Enno

(56) Entgegenhaltungen:
- EP-A2- 2 508 957
- DE-A1-102015 120 221
- US-A1- 2005 166 355
- HESS JURGEN ET AL: "Poisson-driven dirt maps for efficient robot cleaning", 2013 IEEE INTERNATIONAL CONFERENCE ON ROBOTICS AND AUTOMATION (ICRA); 6-10 MAY 2013; KARLSRUHE, GERMANY, IEEE, US, 6. Mai 2013 (2013-05-06), Seiten 2245-2250, XP032506627, ISSN: 1050-4729, DOI: 10.1109/ICRA.2013.6630880 ISBN: 978-1-4673-5641-1 [gefunden am 2013-10-13]

## Beschreibung

### Gebiet der Technik

Die Erfindung betrifft ein Verfahren zum Betrieb eines sich selbsttätig innerhalb einer Umgebung fortbewegenden Bodenbearbeitungsgerätes, wobei das Bodenbearbeitungsgerät eine Bearbeitung eines definierten räumlich begrenzten Flächenteilbereiches der Umgebung durchführt, wobei eine Detektionseinrichtung des Bodenbearbeitungsgerätes während der Bearbeitung des Flächenteilbereiches einen Bearbeitungsstatus des Flächenteilbereiches misst, wobei der Bearbeitungsstatus mit einem definierten Referenzstatus verglichen wird und wobei eine Bearbeitung des Flächenteilbereiches so lange fortgesetzt wird, bis der definierte Referenzstatus erreicht ist.

Des Weiteren betrifft die Erfindung ein sich selbsttätig innerhalb einer Umgebung fortbewegendes Bodenbearbeitungsgerät, welches ausgebildet ist, eine Reinigung eines definierten räumlich begrenzten Flächenteilbereiches der Umgebung durchzuführen.

### Stand der Technik

Bodenbearbeitungsgeräte der vorgenannten Art sowie Verfahren zu deren Betrieb sind im Stand der Technik bekannt.

Bei dem Bodenbearbeitungsgerät kann es sich beispielsweise um einen Reinigungsroboter handeln, welcher selbständig eine Saugaufgabe und/ oder Wischaufgabe ausführen kann. Des Weiteren kann das Bodenbearbeitungsgerät jedoch auch ein Poliergerät, Schleifgerät, ein Rasenmähroboter oder ähnliches sein.

Die Veröffentlichungen DE 10 2011 000 536 A1 und DE 10 2008 014 912 A1 offenbaren beispielsweise Verfahren im Zusammenhang mit selbsttätig verfahrbaren Saug- und/ oder Reinigungsrobotern zur Reinigung von Fußböden. Die Roboter sind mit Abstandsensoren ausgestattet, welche Abstände zu Hindernissen, wie beispielsweise Möbelstücken oder Raumbegrenzungen, messen. Aus den gemessenen Abstandsdaten wird eine Umgebungskarte erstellt, anhand welcher eine Fahrroute geplant werden kann, die eine Kollision mit Hindernissen vermeidet. Die Abstandsensoren arbeiten bevorzugt berührungslos, beispielsweise mit Hilfe von Licht und/ oder Ultraschall. Es ist des Weiteren bekannt, den Roboter mit Mitteln zur Rundum-Abstandsmessung zu versehen, beispielsweise mit einem optischen Triangulationssystem, welches auf einer um eine Vertikalachse rotierenden Plattform oder dergleichen angeordnet ist. Die erfassten Abstandsdaten werden mittels einer Recheneinrichtung des Roboters zu einer Umgebungskarte verarbeitet und gespeichert, so dass im Zuge eines Arbeitsbetriebs auf diese Umgebungskarte zum Zwecke der Orientierung zurückgegriffen werden kann.

Des Weiteren ist es im Stand der Technik, beispielsweise aus der EP 1 967116 B2 bekannt, eine Bearbeitung einer Bodenfläche in Abhängigkeit von einem Verschmutzungsgrad einzelner Bereiche der Bodenfläche anzupassen. Insbesondere können die einzelnen Bereiche von dem Reinigungsroboter angefahren und je nach Verschmutzungsgrad unterschiedlich behandelt werden.

Des Weiteren offenbart die EP 1 711 873 B1 einen Reinigungsroboter, der in einem Spot-Reinigungsmodus betrieben wird, wenn ein verschmutzter Bereich detektiert wird. Der Spot-Reinigungsmodus wird dabei für eine vorbestimmte oder zufällige Zeitspanne, für eine bestimmte oder zufällige Distanz und/ oder bis zum Eintreten eines bestimmten Ereignisses ausgeführt.

Nachteilig bei den vorgenannten Verfahren ist, dass diese die Reinigungstätigkeit des Reinigungsgerätes unabhängig von einem Reinigungserfolg ausführen, so dass nach Ende des Reinigungsbetriebs eine Verschmutzung immer noch zumindest teilweise vorhanden sein kann.

Des Weiteren ist im Stand der Technik aus der US 2005/0166355 A1 ein autonomer mobiler Reinigungsroboter bekannt, der eine Bearbeitung eines definierten Flächenteilbereiches durchführt, wobei eine Detektionseinrichtung des Roboters einen Bearbeitungsstatus des Flächenteilbereiches misst und der Bearbeitungsstatus mit einem in dem Roboter vordefinierten Referenzstatus verglichen wird. Daneben offenbart Hess Juergen et A1 "Poisson-driven dirt maps for efficient robot cleaning" einen Reinigungsroboter, bei welchem ein Nutzer für jede Zelle einer Umgebungskarte des Roboters einen gewünschten Reinigungsstatus vorgeben kann.

### Zusammenfassung der Erfindung

Ausgehend von dem vorgenannten Stand der Technik ist es daher Aufgabe der Erfindung, ein Verfahren zum Betrieb eines sich selbsttätig innerhalb einer Umgebung fortbewegenden Bodenbearbeitungsgerätes zu schaffen, bei welchem der Bearbeitungserfolg, d.h. beispielsweise eine Reinigungsqualität, weiter verbessert ist.

Zur Lösung der Aufgabe wird vorgeschlagen, dass ein Nutzer den Referenzstatus manuell definiert und an das Bodenbearbeitungsgerät übermittelt, und wobei der Nutzer eine geometrische Form und/ oder Größe für den Flächenteilbereich festlegt und/ oder einen Bearbeitungsmodus für die Bearbeitung des Flächenteilbereiches wählt

Die folgenden Angaben dienen nur der Illustration. Die Erfindung als solche wird in den unabhängigen Ansprüchen dargelegt.

Der Referenzstatus wird von einem Nutzer manuell definiert und an das Bodenbearbeitungsgerät übermittelt. Insbesondere kann der Referenzstatus über eine auf einem externen Endgerät installierte Applikation definiert werden. Das externe Endgerät kann vorzugsweise ein mobiles Endgerät, wie ein Mobiltelefon, ein Laptop, ein Tablet-Computer oder ähnliches sein. Bei der Art des Flächenteilbereiches kann es sich um eine Bodenart handeln, beispielsweise Teppichboden oder Hartboden. Die Art der Verschmutzung kann beispielsweise Grobgut, Feingut, Haare, Schmutzflüssigkeit, klebriger Schmutz oder ähnliches sein. Des Weiteren kann der Referenzstatus auch für eine bestimmte Lage und/ oder Größe des Flächenteilbereiches definiert sein. Des Weiteren legt der Nutzer eine geometrische Form oder Größe für einen Flächenteilbereich und/ oder einen Bearbeitungsmodus für die Bearbeitung des Flächenteilbereiches fest. Die geometrische Form kann z.B. ein Quadrat, Rechteck, Polygon, Dreieck, Kreis oder ähnliches sein. Zusätzlich kann eine Größe für den zu bearbeitenden Flächenteilbereich festgelegt werden. Diese Größe kann entweder einen Flächenbetrag angeben oder einen Radius bezogen auf einen Flächenmittelpunkt oder ähnliches. In Abhängigkeit von der Art des Flächenteilbereiches, der Art der Verschmutzung und/ oder der Lage beziehungsweise Größe des Flächenteilbereiches kann dann beispielsweise ein gewünschter Reinigungserfolg, d.h. Bearbeitungsstatus, für ein Reinigungsgerät definiert werden, ein Mäherfolg für ein Rasenmähgerät oder ähnliches. Dabei können unterschiedliche Referenzstatus für verschiedene Arten von Flächenteilbereichen, beispielsweise Bodenarten, definiert sein, so dass Schwellwerte für beispielsweise Teppichböden höher liegen als für Hartböden, da angenommen werden kann, dass bei einem Teppichboden Fasern des Teppichbodens von einer Detektionseinrichtung des Reinigungsgerätes als Schmutz detektiert werden, obwohl diese kein Schmutz sind, sondern immanenter Teil des Teppichbodens.

Für eine Beendigung eines Bearbeitungsbetriebs des Bodenbearbeitungsgerätes ist ein aktueller Bearbeitungsstatus der zu bearbeitenden Fläche relevant. Die Bearbeitung der Fläche wird so lange fortgeführt, bis der aktuelle Bearbeitungsstatus dem definierten Referenzstatus entspricht. Der Referenzstatus gibt somit ein Abbruchkriterium für den Betrieb des Bodenbearbeitungsgerätes an. Der Referenzstatus kann dabei eine Mehrzahl von Bedingungen beinhalten, die bei Erfüllung den Abbruch der Bearbeitung des Flächenteilbereiches auslösen.

Das Verfahren kann zum Betrieb unterschiedlicher Bodenbearbeitungsgeräte dienen, wie beispielsweise Reinigungsgeräten, Schleifgeräten, Poliergeräten, Rasenmährobotern und weiteren. Der Bearbeitungsstatus ist je nach der Art des jeweiligen Bodenbearbeitungsgerätes definiert und kann bei einem Reinigungsgerät beispielsweise ein Reinigungszustand des Flächenteilbereiches sein, bei einem Rasenmähroboter beispielsweise ein Mähzustand eines Rasenbereiches usw.

Bei dem erfindungsgemäßen Verfahren ist die Dauer des Bearbeitungsbetriebs nicht im Voraus festgelegt, sondern wird in Abhängigkeit von dem Bearbeitungsstatus variiert, beispielsweise wird die Dauer eines Reinigungsbetriebs in Abhängigkeit eines Sauberkeitszustandes des betreffenden Flächenteilbereiches fortgesetzt. Das Reinigungsgerät reinigt den Flächenteilbereich so lange, bis der Zielreinigungszustand erreicht ist oder sogar eine noch bessere Reinigungsqualität erreicht ist als durch den Zielreinigungszustand definiert. Mit zunehmender Bearbeitungsdauer steigt auch die Bearbeitungsintensität, welche das Bodenbearbeitungsgerät auf den Flächenteilbereich ausübt. Während des Betriebs wird ein aktueller Bearbeitungsstatus kontinuierlich, regelmäßig oder auch unregelmäßig mittels der Detektionseinrichtung des Bodenbearbeitungsgerätes detektiert. Die Detektionseinrichtung kann beispielsweise eine Kamera sein, welche Bilder des Flächenteilbereiches aufnimmt, oder ein Schmutzsensor, welcher eine Anwesenheit von Staub und/oder Schmutz innerhalb eines Saugluftstroms misst, den eine Motor-/Gebläse-Einheit des Reinigungsgerätes ansaugt. Beispielsweise kann eine flächenbezogene Staubmenge ausgewertet werden, welche einen Hinweis auf einen Verschmutzungsgrad liefert.

Gemäß einer Ausführung der Erfindung wird vorgeschlagen, dass der Bearbeitungsstatus ein Verschmutzungsgrad des Flächenteilbereiches ist, wobei der Verschmutzungsgrad mit einem definierten Referenzverschmutzungsgrad verglichen wird und wobei eine Reinigung des Flächenteilbereiches solange fortgesetzt wird, bis der Verschmutzungsgrad unterhalb des definierten Referenzverschmutzungsgrades liegt. Diese Ausführung bezieht sich auf ein als Reinigungsgerät ausgebildetes Bodenbearbeitungsgerät, bei welchem als Verschmutzungsstatus beispielsweise eine Schmutzmenge pro Flächeneinheit zum Vergleich mit einer definierten Referenz herangezogen wird. Des Weiteren kann auch eine Art und/ oder eine Konsistenz einer Verschmutzung verglichen werden. Es ist des Weiteren möglich, die aktuelle Verschmutzung in unterschiedliche Kategorien zu klassifizieren, insbesondere mit mehreren definierten Referenzverschmutzungsgraden zu vergleichen, welche eine Verschmutzung beispielsweise als niedrig, mittel oder hoch charakterisieren. In Abhängigkeit davon kann dann gegebenenfalls eine andere oder zusätzliche Maßnahme der Flächenreinigung ausgeführt werden, beispielsweise ein Betrieb eines zusätzlichen Reinigungselementes, die Anwendung eines Reinigungsmittels oder ähnliches.

Des Weiteren wird vorgeschlagen, dass in dem definierten räumlich begrenzten Flächenteilbereich ein Spotreinigungs-Modus mit gegenüber einem Standardmodus erhöhter Reinigungsleistung durchgeführt wird. Der Spotreinigungs-Modus kann beispielsweise auf einen Flächenteilbereich von wenigen Quadratmetern, beispielsweise einem quadratischen Bereich von 2 m mal 2 m, begrenzt sein. In diesem Flächenteilbereich bewegt sich das Bodenbearbeitungsgerät beispielsweise entlang einer Vielzahl von parallel zueinander orientierten Linien. Dabei kann das Bodenbearbeitungsgerät mehrere Reinigungszyklen zeitlich hintereinander durchlaufen, wobei das Bodenbearbeitungsgerät nach einem Reinigungszyklus zu einem definierten Ausgangspunkt zurücckehrt und von dort erneut die vorgegebene Verfahrroute durchläuft. Durch das mehrmalige Überfahren jedes einzelnen Ortes des Flächenteilbereiches kann eine erhöhte Reinigungsleistung erreicht werden. Des Weiteren können in dem Spotreinigungs-Modus auch weitere Reinigungsmaßnahmen, wie beispielsweise eine Bürstbearbeitung der zu reinigenden Fläche vorgenommen werden oder weitere Maßnahmen vorgesehen sein.

Es ist vorgesehen, dass der Referenzstatus eine Sollvorgabe für eine Bearbeitungsqualität des Flächenteilbereiches aufweist. Dieser Zielbearbeitungszustand kann vordefinierte Kategorien für die Bearbeitungsqualität des Flächenteilbereiches aufweisen. In dem Fall, dass es sich bei der Bearbeitungsqualität um eine Reinigungsqualität handelt, kann der Referenzstatus sich beispielsweise relativ auf einen gewünschten Verschmutzungsgrad des Flächenteilbereiches beziehen oder eine Angabe über eine absolute flächenbezogene Verschmutzungsmenge enthalten. In dem Fall, dass der Zielreinigungszustand in Abhängigkeit von einem ursprünglichen Verschmutzungsgrad definiert wird, kann zunächst bei einer Lernfahrt oder auch einem ersten Reinigungszyklus zunächst ein Ist-Verschmutzungsgrad ermittelt werden. Dieser Verschmutzungsgrad wird dann als Referenz definiert. Der Zielreinigungszustand kann dann aus einer vordefinierten Auswahlliste ausgewählt werden, die mehrere Stufen umfasst, beispielsweise einen optimalen Zustand von 0 Prozent des ursprünglichen Verschmutzungsgrades, einen normalen Reinigungszustand von 10 Prozent des üblichen Verschmutzungsgrades oder einen Schnellreinigungszustand, welcher 25 Prozent des ursprünglichen Verschmutzungsgrades beträgt. Bei einer absoluten Definition des Zielreinigungszustands kann beispielsweise eine Schmutzmenge als Maßstab herangezogen werden. In dem Reinigungsgerät sind dann Schwellwerte für verschiedene Reinigungszustände hinterlegt, die für eine bestimmte Normfläche definiert sind. Dabei ist ein Reinigungszustand als optimal definiert, wenn pro Normfläche keine Schmutzpartikel detektiert werden.

Des Weiteren wird vorgeschlagen, dass der Referenzstatus in Abhängigkeit von einer Art des Flächenteilbereiches und/ oder einer Art einer Verschmutzung und/ oder einer Lage und/ oder Größe des Flächenteilbereiches definiert wird.

Des Weiteren wird vorgeschlagen, dass die Bearbeitung des Flächenteilbereiches mehrere zeitlich aufeinanderfolgende Bearbeitungszyklen aufweist, wobei der Vergleich während eines oder nach einem Bearbeitungszyklus durchgeführt wird. Diese Ausführung eignet sich insbesondere bei einer Spotreinigung des Flächenteilbereiches, welche mehrere aufeinanderfolgende Bearbeitungszyklen enthält. Das Reinigungsgerät kann nach jedem Bearbeitungszyklus den aktuellen Bearbeitungsstatus, insbesondere Reinigungserfolg, mit einem oder mehreren definierten Reinigungsstatus vergleichen. Wenn der detektierte Bearbeitungsstatus, z.B. Verschmutzungsgrad, am Ende des Bearbeitungszyklus nicht geringer ist als zuvor beziehungsweise immer noch schlechter ist als der gewünschte Referenzstatus, wird ein weiterer Bearbeitungszyklus gestartet, der vorzugsweise auf der gleichen Bewegungsbahn ausgeführt wird, wie die vorhergehenden Bearbeitungszyklen. Um zu verhindern, dass das Reinigungsgerät eine Endlosschleife aus aufeinanderfolgenden Bearbeitungszyklen ausführt, weil eine erkannte Verschmutzung nicht beseitigt werden kann, empfiehlt es sich, ein Abbruchkriterium zu definieren. Dadurch kann eine Ausstiegsbedingung vorgegeben sein, insbesondere kann eine aktuelle Schmutzaufnahmeleistung des Reinigungsgerätes bestimmt und mit einem Grenzwert verglichen werden. Sofern dieser Grenzwert unterschritten wird, ist die Ausstiegsbedingung erfüllt und es wird kein neuer Bearbeitungszyklus gestartet. Die Information, dass auf der Fläche noch eine Verschmutzung vorhanden ist, das Reinigungsgerät diese jedoch nicht beseitigen kann, kann einem Nutzer auf einem externen Endgerät angezeigt werden, beispielsweise in einer Smartphone-App, als Textnachricht oder ähnliches. Daraufhin kann der Nutzer beispielsweise ein anderes Reinigungsgerät mit einer alternativen Reinigungsmethode beauftragen, selbst eine manuelle Reinigung vornehmen oder ähnliches.

Insbesondere wird vorgeschlagen, dass der Vergleich während eines Aufenthalts des Bodenbearbeitungsgerätes an einer definierten Start-Stopp-Position durchgeführt wird. Gemäß dieser Ausführung gelangt das Bodenbearbeitungsgerät nach jedem Bearbeitungszyklus an die Start-Stopp-Position zurück, wo dann der in dem letzten Bearbeitungszyklus detektierte Bearbeitungsstatus mit dem definierten Referenzstatus verglichen wird. Wenn erkannt wird, dass der gewünschte Referenzstatus noch nicht erreicht ist, wird das Bodenbearbeitungsgerät ausgehend von der Start-Stopp-Position erneut gestartet und wieder über den Flächenteilbereich verfahren. Nach dem Erreichen des definierten Referenzstatus oder bei Erfüllung einer Ausstiegsbedingung kann das Bodenbearbeitungsgerät eine Parkposition einnehmen, die zum Beispiel eine Position an einer Basisstation des Bodenbearbeitungsgerätes ist.

Schließlich wird vorgeschlagen, dass sich das Bodenbearbeitungsgerät während der Bearbeitung des Flächenteilbereiches auf einer mäanderförmigen Bewegungsbahn oder auf parallel zueinander orientierten Bewegungsbahnen fortbewegt. Der Flächenteilbereich wird somit entlang einer definierten regelmäßigen Bewegungsbahn bearbeitet, welche parallele Fahrtrichtungen beinhaltet. Ein solcher Modus ist beispielsweise ein Spotreinigungs-Modus eines Reinigungsgerätes.

Neben dem zuvor beschriebenen Verfahren zum Betrieb eines sich selbsttätig innerhalb einer Umgebung fortbewegenden Bodenbearbeitungsgerätes wird mit der Erfindung des Weiteren auch ein sich selbsttätig innerhalb einer Umgebung fortbewegendes Bodenbearbeitungsgerät vorgeschlagen, welches ausgebildet ist, eine Reinigung eines definierten räumlich begrenzten Flächenteilbereiches der Umgebung durchzuführen, wobei das Bodenbearbeitungsgerät eine Steuereinrichtung aufweist, die eingerichtet ist, das Bodenbearbeitungsgerät zur Ausführung eines zuvor beschriebenen Verfahrens zu steuern. Die Vorteile und weiteren Merkmale des erfindungsgemäßen Bodenbearbeitungsgerätes ergeben sich dabei wie zuvor in Bezug auf das erfindungsgemäße Verfahren beschrieben. Das Bodenbearbeitungsgerät kann wie zuvor erläutert, ein Reinigungsgerät, ein Poliergerät, Schleifgerät, ein Rasenmähroboter oder auch ein anderes Gerät sein, welches eine Bodenbearbeitungsaufgabe ausführt und dazu einen Ist-Bearbeitungsstatus eines Flächenteilbereiches mit einem gewünschten Referenzstatus vergleicht.

### Kurze Beschreibung der Zeichnungen

Im Folgenden wird die Erfindung anhand von Ausführungsbeispielen näher erläutert. Es zeigen:
- Fig. 1: eine perspektivische Darstellung eines Bodenbearbeitungsgerätes,
- Fig. 2: ein externes Endgerät mit einer Umgebungskarte des Bodenbearbeitungsgerätes,
- Fig. 3: ein externes Endgerät mit einem Umgebungsbild der Umgebung des Bodenbearbeitungsgerätes,
- Fig. 4: ein Auswahlmenü zur Auswahl von Parametern für einen Bodenbearbeitungsbetrieb,
- Fig. 5: eine Umgebung mit einem Flächenteilbereich, in welchem das Bodenbearbeitungsgerät verfahren soll,
- Fig. 6: eine Umgebung mit einem Flächenteilbereich, an welchem ein Nutzer das Bodenbearbeitungsgerät platziert.

### Beschreibung der Ausführungsformen

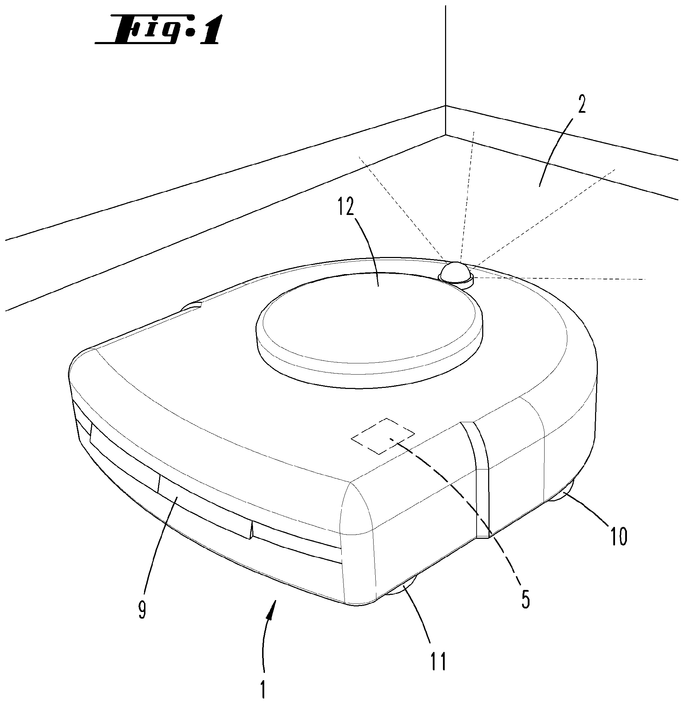

Figur 1 zeigt ein Bodenbearbeitungsgerät 1, welches hier als Saugroboter ausgestaltet ist. Das Bodenbearbeitungsgerät 1 verfügt über elektromotorisch angetriebene Räder 10, mit deren Hilfe sich das Bodenbearbeitungsgerät 1 innerhalb einer Umgebung fortbewegen kann. Des Weiteren verfügt das Bodenbearbeitungsgerät 1 über Reinigungselemente 11, nämlich hier unter anderem eine Borstenwalze, welche in der dargestellten üblichen Betriebsstellung des Bodenbearbeitungsgerätes 1 im Wesentlichen horizontal orientiert ist, d.h. im Wesentlichen parallel zu einem zu reinigenden Flächenteilbereich 2. Das Bodenbearbeitungsgerät 1 weist im Bereich des Reinigungselementes 11 eine nicht weiter dargestellte Saugmundöffnung auf, über welche mittels einer Motor-Gebläse-Einheit mit Sauggut beaufschlagte Luft in das Bodenbearbeitungsgerät 1 eingesaugt werden kann. Für die Energieversorgung der einzelnen Elektrokomponenten, wie für einen Antriebsmotor der Räder 10, des Reinigungselementes 11 und darüber hinaus weiter vorgesehene Elektronik, weist das Bodenbearbeitungsgerät 1 einen nicht dargestellten, wiederaufladbaren Akkumulator auf.

Das Bodenbearbeitungsgerät 1 weist darüber hinaus eine Abstandsmesseinrichtung 12 auf, welche hier beispielsweise eine Triangulationsmesseinrichtung beinhaltet. Die Abstandsmesseinrichtung 12 ist innerhalb des Gehäuses des Bodenbearbeitungsgerät 1 angeordnet und weist im Einzelnen eine Laserdiode auf, deren emittierter Lichtstrahl über eine Umlenkeinrichtung aus dem Gehäuse herausgeführt und um eine in der gezeigten Orientierung des Bodenbearbeitungsgerätes 1 senkrechte Drehachse rotierbar ist, insbesondere mit einem Messwinkel von 360°. Dadurch ist bevorzugt eine Rundum-Abstandsmessung um das Bodenbearbeitungsgerät 1 möglich. Die Abstandsmesseinrichtung 12 misst Abstände zu Hindernissen, beispielsweise Möbelstücken, innerhalb der Umgebung des Bodenbearbeitungsgerätes 1.

Das Bodenbearbeitungsgerät 1 verfügt zudem über eine Detektionseinrichtung 9, nämlich hier einen in Fahrtrichtung des Bodenbearbeitungsgerätes 1 vorne angeordneten Bildsensor, welcher eine Verschmutzung eines aktuell von dem Bodenbearbeitungsgerät 1 befahrenen Flächenteilbereiches 2 detektieren kann. Die Detektionseinrichtung 9 nimmt Bilder des Flächenteilbereiches 2 auf und vergleicht diese mit Bildern einer Referenzverschmutzung. Alternativ könnte die Detektionseinrichtung 9 auch ein Staubsensor sein, welcher in einer Strömungszuführung zu der Motor-Gebläse-Einheit des Bodenbearbeitungsgerätes 1 angeordnet ist und Schmutzpartikel detektiert. Das Bodenbearbeitungsgerät 1 verfügt zudem über eine Steuereinrichtung 5, welche ausgebildet ist, den Vergleich zwischen einer von der Detektionseinrichtung 9 aufgenommenen Verschmutzung und einer oder mehreren in dem Bodenbearbeitungsgerät 1 gespeicherten Referenzverschmutzungen auszuführen. Hierzu kann die Steuereinrichtung 5 alternativ auch auf eine externe Speichereinheit zugreifen, mit welcher das Bodenbearbeitungsgerät 1 in Kommunikationsverbindung steht.

Sofern es sich bei dem Bodenbearbeitungsgerät 1 um ein anderes Gerät handelt als das hier beispielhaft dargestellte Reinigungsgerät, könnte die Detektionseinrichtung 9 ausgebildet sein, einen anderen Parameter des Flächenteilbereiches 2 zu messen. Bei einem Rasenmähroboter könnte dies beispielsweise ein gemähter beziehungsweise noch nicht gemähter Status eines Bereiches der Rasenfläche sein.

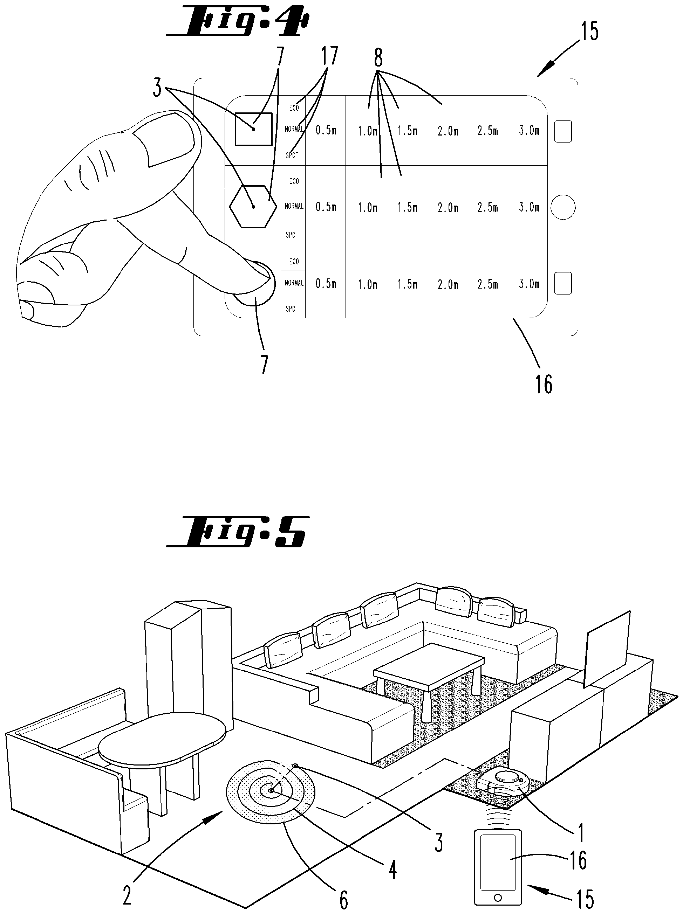

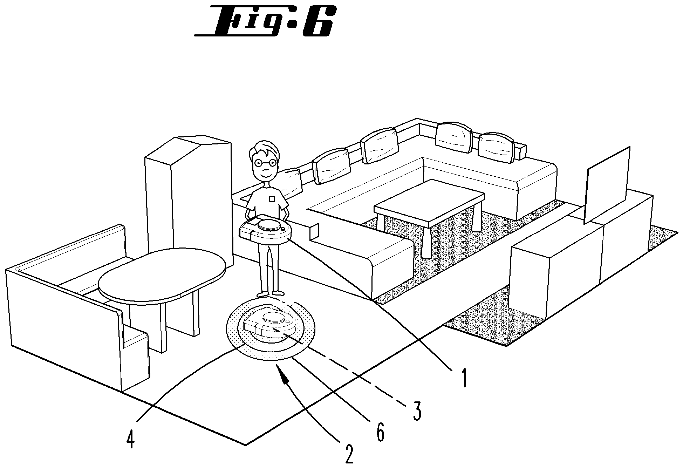

Das Bodenbearbeitungsgerät 1 folgt zur Reinigung eines oder mehrerer Flächenteilbereiche 2 einer Bewegungsbahn 4 (siehe Figuren 5 und 6) innerhalb der Umgebung. Diese Bewegungsbahn 4 kann beispielsweise eine Fortbewegungsroute des Bodenbearbeitungsgerätes 1 während eines Spotreinigungs-Modus sein, in welchem das Bodenbearbeitungsgerät 1 einen begrenzten Flächenteilbereich 2 mit gegenüber einem Standardmodus erhöhter Reinigungsleistung der Motor-Gebläse-Einheit reinigt. In diesem Spotreinigungs-Modus fährt das Bodenbearbeitungsgerät 1 den Flächenteilbereich 2 beispielsweise ausgehend von einer Start-Stopp-Position 3 entlang einer schneckenartigen Bewegungsbahn 4 ab und beseitigt dort Verschmutzungen.

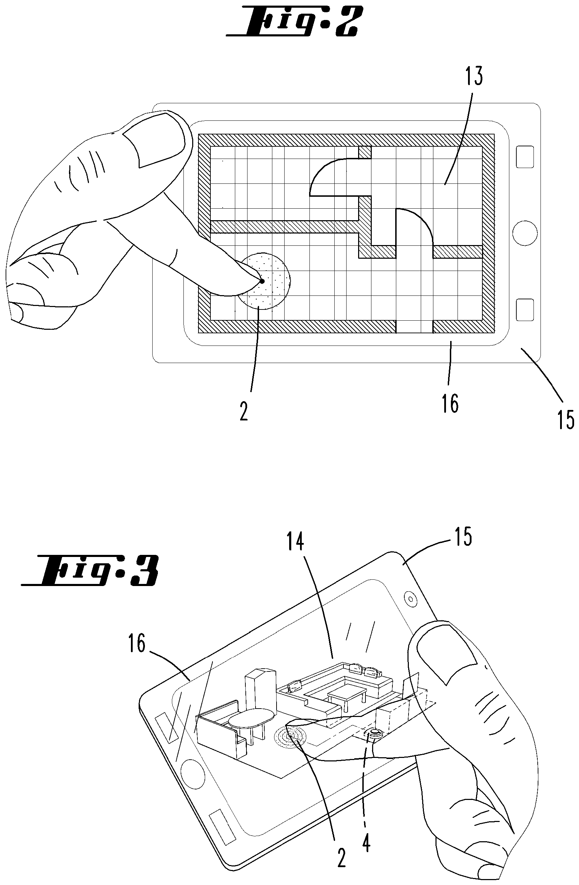

Die Figuren 2 und 3 zeigen eine Nutzereingabe eines Nutzers auf einem in Kommunikationsverbindung mit dem Bodenbearbeitungsgerät 1 stehenden externen Endgerät 15. Das externe Endgerät 15 ist in Figur 2 beispielsweise ein Tablet-Computer, auf dessen Display 16 eine Umgebungskarte 13 des Bodenbearbeitungsgerätes 1 dargestellt ist. Gemäß Figur 3 ist das externe Endgerät 15 ein Mobiltelefon, auf dessen Display 16 ein Umgebungsbild 14 der Umgebung des Bodenbearbeitungsgerätes 1 dargestellt ist. Das Umgebungsbild 14 ist beispielsweise eine Kameraaufnahme der Detektionseinrichtung 9. Wie in den Figuren 2 und 3 dargestellt, kann der Nutzer in der Umgebungskarte 13 beziehungsweise dem Umgebungsbild 14 einen Flächenteilbereich 2 der Umgebung auswählen, beispielsweise einen bestimmten Teilbereich einer Wohnung oder eines Raumes, in welchem eine Bodenbearbeitung, hier eine Reinigung, stattfinden soll. Durch Antippen eines Bereiches auf dem Display 16 des externen Endgerätes 15 kann ein Flächenteilbereich 2 markiert werden.

Zudem hat der Nutzer, wie in Figur 4 dargestellt, die Möglichkeit, Parameter für die Bearbeitung des Flächenteilbereiches 2 zu definieren. Hierzu kann dem Nutzer, wie in Figur 4 dargestellt, auf dem Display 16 des externen Endgerätes 15 ein Auswahlmenü angezeigt werden, welches verschiedene Flächenformen 7 und Flächengrößen 8 für den Flächenteilbereich 2 angibt, auf welchem eine Spotreinigung durchgeführt werden soll. Die angegebene Flächengröße 8 bezeichnet hier beispielsweise eine halbe Seitenlänge der jeweiligen Flächenform 7 ausgehend von einer zentralen Start-Stopp-Position 3. In der obersten Zeile der dargestellten Tabelle bedeutet die Flächengröße 8 "0,5 m" somit eine quadratische Flächenform 7 mit einer Fläche von insgesamt (2 x 0,5 m)², d. h. 1 m². Eine wählbare Flächengröße 8 von "1,0 m" bedeutet einen von dem Bodenbearbeitungsgerät 1 abzufahrenden Flächenteilbereich 2 mit einer Gesamtfläche von 4 m². Bei der in der untersten Zeile der Tabelle dargestellten kreisförmigen Flächenform bezeichnet die Flächengröße 8 den Radius des Kreises auf dem zu reinigenden Flächenteilbereich 2. Des Weiteren kann der Nutzer in der dargestellten Tabelle einen Bearbeitungsmodus 17 wählen, beispielsweise einen Eco-Modus, einen Normal-Modus oder einen leistungserhöhten Spotreinigungs-Modus.

Figur 5 zeigt eine Umgebung mit einem Bodenbearbeitungsgerät 1, welches ein Nutzer mittels eines externen Endgerätes 15 steuern kann. Der Nutzer kann einen Steuerbefehl an das Bodenbearbeitungsgerät 1 übermitteln, zu einem gewählten Flächenteilbereich 2 mit einer Start-Stopp-Position 3 zu fahren. Die Start-Stopp-Position 3 befindet sich auf einer äußeren Umfangsbahn 6 des kreisförmigen Flächenteilbereiches 2.

Figur 6 zeigt demgegenüber eine Ausführungsform, bei welcher der Nutzer das Bodenbearbeitungsgerät 1 selbst auf einem gewünschten Flächenteilbereich 2 platziert, nämlich zentral auf eine Start-Stopp-Position 3 stellt, welche ein Zentrum der gewünschten kreisförmigen Flächenform 7 ist. Während des hier gewählten Spotreinigungs-Modus verfährt das Bodenbearbeitungsgerät 1 entlang einer spiralförmigen Bewegungsbahn 4 und kehrt nach jedem Durchlauf der Bewegungsbahn 4 zu der Start-Stopp-Position 3 zurück. Die manuelle Platzierung erfolgt so, dass das Bodenbearbeitungsgerät 1 durch den Nutzer mittig in den zu reinigenden Flächenteilbereich 2 gesetzt wird. Diese Position wird als Start-Stopp-Position 3 für jeden von mehreren zeitlich aufeinanderfolgenden Reinigungszyklen verwendet. Über ein externes Endgerät 15 oder auch eine Tastatur oder ein Touchscreen des Bodenbearbeitungsgerätes 1 wählt der Nutzer die Flächengröße 8, die zu reinigen ist, aus.

Bei der virtuellen Platzierung des Bodenbearbeitungsgerätes 1 gemäß Figur 5 gibt der Nutzer die gewünschte Position des Bodenbearbeitungsgerätes 1 in einer auf dem Display 16 des externen Endgerätes 5 dargestellten Umgebungskarte 13 oder Umgebungsbild 14 an. Anschließend fährt das Bodenbearbeitungsgerät 1 an die mit dem gewählten Flächenteilbereich 2 verknüpfte Start-Stopp-Position 3.

Zusätzlich kann der Nutzer einen gewünschten Ziel-Bearbeitungsstatus wählen, welcher hier beispielsweise einen bestimmten Verschmutzungsgrad für den zu reinigenden Flächenteilbereich 2 angibt. Des Weiteren könnte mittels des externen Endgerätes 15 auch eine zeitverzögerte Reinigung oder eine Reinigung zu einem bestimmten Zeitpunkt selektiert werden. Des Weiteren ist es auch möglich, regelmäßige Intervalle für eine Reinigungsfahrt des Bodenbearbeitungsgerätes 1 festzulegen.

Zum Festlegen des Ziel-Bearbeitungsstatus kann der Nutzer eine Auswahl aus mehreren möglichen vordefinierten Bearbeitungsstatus wählen, die sich entweder auf einen definierten Ausgangs-Verschmutzungsgrad beziehen oder einen absoluten flächenbezogenen Verschmutzungsgrad betreffen. In dem Fall, dass beispielsweise ein Verschmutzungsgrad relativ zu einem ursprünglichen Verschmutzungsgrad definiert wird, wird der ursprüngliche Verschmutzungsgrad zunächst während eines ersten Reinigungszyklus, d.h. einer ersten Fahrt des Bodenbearbeitungsgerätes 1, erfasst. Der Ziel-Bearbeitungsstatus kann aus einer vordefinierten Auswahlliste ausgewählt werden, die beispielsweise folgende Stufen umfasst: "Optimal" gleich eine Reduzierung des Verschmutzungsgrades auf 0 Prozent des ursprünglichen Verschmutzungsgrades, "Normal" gleich Reduzierung des Verschmutzungsgrades auf 10 Prozent des ursprünglichen Verschmutzungsgrades, "Schnell" gleich Reduzierung des Verschmutzungsgrades auf 25 Prozent des ursprünglichen Verschmutzungsgrades. Sofern der Ziel-Bearbeitungsstatus durch ein flächenbezogenes Sensorsignal definiert wird, kann beispielsweise eine Anzahl von Schmutzpartikeln pro normierter Flächeneinheit definiert werden. Dazu werden in dem Bodenbearbeitungsgerät 1 definierte Referenzstatus gespeichert, die für eine Normfläche, beispielsweise eine rechteckige Fläche mit einer Größe von 2 m x 2 m, oder eine kreisförmige Fläche mit einem Radius von 1 m, definiert sind. Die Referenzstatus können beispielsweise sein: Ein optimaler Bearbeitungsstatus, bei welchem pro Normfläche kein Sensorsignal auftritt, ein normaler Bearbeitungsstatus, bei welchem pro Normfläche bis zu zehn Sensorsignale auftreten und ein Bearbeitungsstatus einer Schnellreinigung, bei welchem bis zu fünfzig Sensorsignale pro Normfläche auftreten. Der Nutzer wählt aus den definierten Referenzstatus einen gewünschten Ziel-Status aus.

Des Weiteren kann der Nutzer eine Angabe über eine Art der Verschmutzung des zu reinigenden Flächenteilbereiches 2 an die Steuereinrichtung 5 des Bodenbearbeitungsgerätes 1 übermitteln. Da die Detektionseinrichtung 9 bei unterschiedlichen Verschmutzungsarten gegebenenfalls unterschiedlich reagiert, kann dadurch die Definition beziehungsweise Auswahl von Grenzwerten angepasst werden. Die Schmutzart kann beispielsweise in Grobgut, Feingut, Haare, Flüssigkeiten, klebrigen Schmutz und weitere unterteilt sein. Für eine zuverlässige Bestimmung eines tatsächlichen Bearbeitungsstatus, d.h. Verschmutzungsgrades des Flächenteilbereiches 2, kann der Nutzer auch eine Information über eine Bodenart an die Steuereinrichtung 5 des Bodenbearbeitungsgerätes 1 übermitteln. Die Bodenart kann zum Beispiel in einem früheren Reinigungslauf bestimmt werden. Gegebenenfalls kann es sinnvoll sein, einen Referenzverschmutzungsgrad zu erhöhen, beispielsweise bei Teppichböden einen Faktor gegenüber einem Hartboden anzuwenden, da angenommen werden kann, dass bei einem Teppichboden einige Fasern von der Detektionseinrichtung 9 detektiert und als Verschmutzung gedeutet werden.

Die Bearbeitung des Flächenteilbereiches 2 kann über eine Nutzerschnittstelle an dem Bodenbearbeitungsgerät 1 oder auch mittels des externen Endgerätes 15 gestartet werden. Während der Bearbeitung des Flächenteilbereiches 2 misst die Detektionseinrichtung 9 einen aktuellen Bearbeitungsstatus, d.h. hier Verschmutzungsstatus, des Flächenteilbereiches 2, wenn der Verschmutzungsstatus am Ende eines Reinigungszyklus höher ist als der gewählte Ziel-Reinigungsstatus, wird ein erneuter Reinigungszyklus gestartet, wobei dieser vorteilhaft entlang der zuvor gewählten Bewegungsbahn 4 erfolgt. Nach dem Erreichen des Referenzstatus, d.h. des Referenzverschmutzungsgrades, wird vorteilhaft eine Parkposition des Bodenbearbeitungsgerätes 1 angesteuert. Diese kann beispielsweise eine Ruheposition an einer Basisstation des Bodenbearbeitungsgerätes 1 sein.

Die von dem Nutzer durchgeführten Reinigungsvorgänge können in einer Historie gespeichert und dem Nutzer auf dem externen Endgerät 15 angezeigt werden. Vorteilhaft werden beispielsweise bereits gereinigte Flächenteilbereiche 2 in einer Umgebungskarte 13 oder einem Umgebungsbild 14 angezeigt, so dass der Nutzer eine erneute schnelle Auswahl treffen kann. Beispielsweise kann der Nutzer mehrere Flächenteilbereiche 2 auswählen, die als aufeinanderfolgende Flächenteilbereiche 2 für eine Spotreinigung angefahren werden sollen. Zusätzlich kann der Nutzer wählen, ob der durchgeführte Reinigungsbetrieb und gegebenenfalls dessen Ergebnisse in eine Umgebungskarte 13 oder ein Umgebungsbild 14 eingetragen werden, oder diese ohne die Möglichkeit einer späteren Verwendung gelöscht werden sollen.

### Liste der Bezugszeichen

- 1: Bodenbearbeitungsgerät
- 2: Flächenteilbereich
- 3: Start-Stopp-Position
- 4: Bewegungsbahn
- 5: Steuereinrichtung
- 6: Umfangsbahn
- 7: Flächenform
- 8: Flächengröße
- 9: Detektionseinrichtung
- 10: Rad
- 11: Reinigungselement
- 12: Abstandsmesseinrichtung
- 13: Umgebungskarte
- 14: Umgebungsbild
- 15: externes Endgerät
- 16: Display
- 17: Bearbeitungsmodus

## Patentansprüche

1. Verfahren zum Betrieb eines sich selbsttätig innerhalb einer Umgebung fortbewegenden Bodenbearbeitungsgerätes (1), wobei das Bodenbearbeitungsgerät (1) eine Bearbeitung eines definierten räumlich begrenzten Flächenteilbereiches (2) der Umgebung durchführt, wobei eine Detektionseinrichtung (3) des Bodenbearbeitungsgerätes (1) während der Bearbeitung des Flächenteilbereiches (2) einen Bearbeitungsstatus des Flächenteilbereiches (2) misst, wobei der Bearbeitungsstatus mit einem definierten Referenzstatus verglichen wird und wobei eine Bearbeitung des Flächenteilbereiches (2) so lange fortgesetzt wird, bis der definierte Referenzstatus erreicht ist, **dadurch gekennzeichnet, dass** ein Nutzer den Referenzstatus manuell definiert und an das Bodenbearbeitungsgerät (1) übermittelt, und wobei der Nutzer eine geometrische Form und/ oder Größe für den Flächenteilbereich (2) festlegt und einen Bearbeitungsmodus für die Bearbeitung des Flächenteilbereiches (2) wählt.

2. Verfahren nach Anspruch 1, **dadurch gekennzeichnet, dass** der Bearbeitungsstatus ein Verschmutzungsgrad des Flächenteilbereiches (2) ist, wobei der Verschmutzungsgrad mit einem definierten Referenzverschmutzungsgrad verglichen wird und wobei eine Reinigung des Flächenteilbereiches (2) solange fortgesetzt wird, bis der Verschmutzungsgrad unterhalb des definierten Referenzverschmutzungsgrades liegt.

3. Verfahren nach Anspruch 1 oder 2, **dadurch gekennzeichnet, dass** in dem definierten räumlich begrenzten Flächenteilbereich (2) ein Spotreinigungs-Modus mit gegenüber einem Standardmodus erhöhter Reinigungsleistung durchgeführt wird.

4. Verfahren nach einem der vorhergehenden Ansprüche, **dadurch gekennzeichnet, dass** der Referenzstatus eine Sollvorgabe für eine Bearbeitungsqualität des Flächenteilbereiches (2) aufweist.

5. Verfahren nach einem der vorhergehenden Ansprüche, **dadurch gekennzeichnet, dass** der Referenzstatus in Abhängigkeit von einer Art des Flächenteilbereiches (2) und/ oder einer Art einer Verschmutzung und/ oder einer Lage und/ oder Größe des Flächenteilbereiches (2) definiert wird.

6. Verfahren nach einem der vorhergehenden Ansprüche, **dadurch gekennzeichnet, dass** die Bearbeitung des Flächenteilbereiches (2) mehrere zeitlich aufeinanderfolgende Bearbeitungszyklen aufweist, wobei der Vergleich während eines oder nach einem Bearbeitungszyklus durchgeführt wird.

7. Verfahren nach einem der vorhergehenden Ansprüche, **dadurch gekennzeichnet, dass** der Vergleich während eines Aufenthalts des Bodenbearbeitungsgerätes (1) an einer definierten Start-Stopp-Position (3) durchgeführt wird.

8. Verfahren nach einem der vorhergehenden Ansprüche, **dadurch gekennzeichnet, dass** sich das Bodenbearbeitungsgerät (1) während der Bearbeitung des Flächenteilbereiches (2) auf einer mäanderförmigen Bewegungsbahn (4) oder auf parallel zueinander orientierten Bewegungsbahnen (4) fortbewegt.

9. Sich selbsttätig innerhalb einer Umgebung fortbewegendes Bodenbearbeitungsgerät (1), welches ausgebildet ist, eine Reinigung eines definierten räumlich begrenzten Flächenteilbereiches (2) der Umgebung durchzuführen, **gekennzeichnet durch** eine Steuereinrichtung (5), welche eingerichtet ist, das Bodenbearbeitungsgerät (1) zur Ausführung eines Verfahrens gemäß einem der vorhergehenden Ansprüche zu steuern.

## Claims

1. A method for operating a floor treatment device (1) that travels autonomously within an environment, wherein the floor treatment device (1) performs a treatment of a defined and spatially delimited partial surface region (2) of the environment, wherein during the treatment of the partial surface region (2) a detection device (3) of the floor treatment device (1) measures a treatment status of the partial surface region (2), wherein the treatment status is compared with a defined reference status and a treatment of the partial surface region (2) is continued until such time as the defined reference status is reached, **characterized in that** a user defines the reference status manually and transmits said status to the floor treatment device (1) and wherein the user defines a geometric shape and/ or size for the partial surface region (2) and selects a treatment mode for the processing of the partial surface region (2).

2. The method according to Claim 1, **characterized in that** the treatment status is a contamination level of the partial surface region (2), wherein the contamination level is compared with a defined reference contamination level and wherein a cleaning of the partial surface region (2) continues until the contamination level is below the defined reference contamination level.

3. The method according to Claim 1 or 2, **characterized in that** in the defined spatially delimited partial surface region (2) a spot cleaning mode with increased cleaning performance compared to a standard mode is implemented.

4. The method according to any one of the preceding claims, **characterized in that** the reference status has a target specification for a treatment quality of the partial surface region (2).

5. The method according to any one of the preceding claims, **characterized in that** the reference status is defined as a function of the type of the partial surface region (2) and/ or a type of contamination and/ or a location and/ or size of the partial surface region (2).

6. The method according to any one of the preceding claims, **characterized in that** the treatment of the partial surface region (2) comprises a plurality of temporally consecutive treatment cycles, wherein the comparison is performed during or after a treatment cycle.

7. The method according to any one of the preceding claims, **characterized in that** the comparison is performed while the floor treatment device (1) is stationary at a defined start/ stop position (3).

8. The method according to any one of the preceding claims, **characterized in that** during the treatment of the partial surface region (2) the floor treatment device (1) moves on a meandering trajectory (4) or on trajectories (4) oriented parallel to each other.

9. A floor treatment device (1) which travels autonomously within an environment and is designed to perform a cleaning of a defined spatially delimited partial surface region (2) of the environment, **characterized by** a control device (5) which is configured to control the floor treatment device (1) for the execution of a method according to any one of the preceding claims.

## Revendications

1. Procédé de fonctionnement d'un appareil de traitement du sol (1) se déplaçant automatiquement dans un environnement, dans lequel l'appareil de traitement du sol (1) effectue un traitement d'une zone partielle de surface (2) de l'environnement qui est définie de manière délimitée dans l'espace, dans lequel un dispositif de détection (3) de l'appareil de traitement du sol (1) mesure un état de traitement de la zone partielle de surface (2) pendant le traitement de la zone partielle de surface (2), dans lequel l'état de traitement est comparé à un état de référence défini et dans lequel un traitement de la zone partielle de surface (2) est poursuivi jusqu'à ce que l'état de référence défini soit atteint, **caractérisé en ce qu'**un utilisateur définit manuellement l'état de référence et le transmet à l'appareil de traitement de sol (1), et dans lequel l'utilisateur définit une forme géométrique et/ou une taille pour la zone partielle de surface (2) et sélectionne un mode de traitement pour le traitement de la zone partielle de surface (2).

2. Procédé selon la revendication 1, **caractérisé en ce que** l'état de traitement est un degré de salissure de la zone partielle de surface (2), dans lequel le degré de salissure est comparé à un degré de salissure de référence défini et dans lequel un nettoyage de la zone partielle de surface (2) est poursuivi jusqu'à ce que le degré de salissure soit inférieur au degré de salissure de référence défini.

3. Procédé selon la revendication 1 ou 2, **caractérisé en ce qu'**un mode de nettoyage ponctuel avec une puissance de nettoyage accrue par rapport à un mode standard est exécuté dans la zone partielle de surface (2) définie de manière délimitée dans l'espace.

4. Procédé selon l'une des revendications précédentes, **caractérisé en ce que** l'état de référence présente une spécification cible pour une qualité de traitement de la zone partielle de surface (2).

5. Procédé selon l'une des revendications précédentes, **caractérisé en ce que** l'état de référence est défini en fonction d'un type de la zone partielle de surface (2) et/ou d'un type de salissure et/ou d'une position et/ou d'une taille de la zone partielle de surface (2).

6. Procédé selon l'une des revendications précédentes, **caractérisé en ce que** le traitement de la zone partielle de surface (2) comprend une pluralité de cycles de traitement successifs dans le temps, la comparaison étant effectuée pendant ou après un cycle de traitement.

7. Procédé selon l'une des revendications précédentes, **caractérisé en ce que** la comparaison est effectuée pendant un arrêt de l'appareil de traitement du sol (1) à une position définie de départ-arrêt (3).

8. Procédé selon l'une des revendications précédentes, **caractérisé en ce que** l'appareil de traitement du sol (1) se déplace pendant le traitement de la zone partielle de surface (2) le long d'un trajet de déplacement (4) en forme de méandre ou le long de trajets de déplacement (4) orientés parallèlement les uns aux autres.

9. Appareil de traitement du sol (1) qui se déplace automatiquement dans un environnement et qui est conçu pour effectuer un nettoyage d'une zone partielle de surface (2) de l'environnement qui est définie de manière délimitée dans l'espace, **caractérisé par** un dispositif de commande (5) qui est conçu pour commander l'appareil de traitement du sol (1) de manière à mettre en œuvre un procédé selon l'une des revendications précédentes.
